# FASCICULE DE BREVET EUROPEEN

(11) **EP 4 419 807 B1**
(45) Date de publication et mention de la délivrance du brevet: **18.03.2026**
(21) Numéro de dépôt: 22801174.8
(22) Date de dépôt: 19.10.2022
(51) Int. Cl.: F16D 1/10, B64C 25/10, B64C 25/34, F16D 1/00

(54) **ATTERRISSEUR D'AERONEF COMPORTANT DES PIECES MALE ET FEMELLE EMBOITEES POUR LA TRANSMISSION DE COUPLES MECANIQUES**
LANDEFAHRWERK EINES FLUGZEUGS MIT INEINANDERGREIFENDEN MÄNNLICHEN UND WEIBLICHEN TEILEN ZUR ÜBERTRAGUNG VON MECHANISCHEN DREHMOMENTEN
AIRCRAFT LANDING GEAR WITH INTERLOCKING MALE AND FEMALE PARTS FOR THE TRANSMISSION OF MECHANICAL TORQUES

(30) Priorité: 19.10.2021 FR 2111105
(43) Date de publication de la demande: 28.08.2024
(73) Titulaire: Safran Landing Systems, 78140 Vélizy-Villacoublay (FR)
(72) Inventeur: NGUYEN, Nicolas, 77550 MOISSY-CRAMAYEL (FR); BLANPAIN, Thierry, 77550 MOISSY-CRAMAYEL (FR)
(74) Mandataire: Cabinet Boettcher
(86) Numéro de dépôt international: PCT/EP2022/079053
(87) Numéro de publication internationale: WO 2023/066970

(56) Documents cités:
- EP-A2- 0 098 777
- WO-A1-2013/152386
- DE-A1- 102015 209 559
- FR-A1- 2 995 044
- FR-A1- 3 070 370

## Description

### DOMAINE TECHNIQUE

La présente invention concerne le domaine des atterrisseurs d'aéronef.

### ARRIERE PLAN DE L'INVENTION

Plusieurs solutions techniques ont été développées pour permettre la transmission de couples mécaniques importants entre différentes parties d'un atterrisseur alors que l'atterrisseur est soumis à des charges mécaniques importantes variables tant en intensité qu'en direction ou sens.

Chacune de ces solutions techniques est le résultat de compromis entre différents paramètres de conception tels que la résistance mécanique attendue de l'atterrisseur, sa durabilité, sa masse, son coût de fabrication, sa complexité de production, le volume de matière nécessaire à la production.

Les zones de l'atterrisseur les plus critiques à développer sont celles qui concentrent des contraintes en torsion, en cisaillement et en flexion.

De telles zones doivent être dimensionnées pour supporter les importantes variations de contraintes subies par l'atterrisseur tout au long de son utilisation.

La figure 1 illustre une tige coulissante 1 d'atterrisseur de l'art antérieur du type utilisé dans les atterrisseurs principaux des avions AIRBUS A320 ^{®}.

Cette tige coulissante en forme de T présente un essieu 2 destiné à recevoir :
- d'une part, une paire de roues montées à rotation autour de l'essieu 2, selon un axe de rotation Rx ; et
- d'autre part, une paire de freins adaptés chacun à freiner l'une de ces roues.

Les figures 2a et 2b illustrent un autre exemple d'atterrisseur de l'art antérieur présenté dans le document brevet FR 3 070 370.

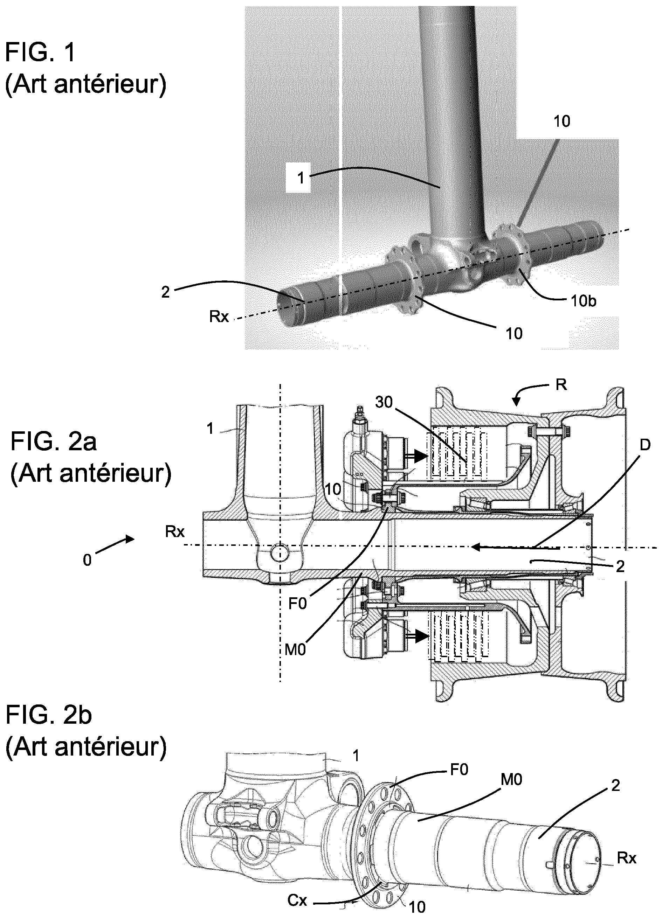

Dans ces exemples des figure 1, 2a et 2b, les couples mécaniques importants sont des couples de freinage qui sont respectivement transmis des freins 30 vers la tige 1 via des mains d'essieu 10, 10b.

Les mains d'essieu 10, 10b sont situées dans des zones de forte concentration de contraintes mécaniques, en torsion du fait des couples de freinage, en flexion et en cisaillement du fait de la réaction d'appui des roues sur le sol et des efforts de freinage appliqués par ces roues R sur le sol.

Dans l'exemple particulier de la figure 1, afin de limiter la masse de la tige coulissante 1, la tige est une pièce forgée monobloc, très résistante, les mains d'essieu 10, 10b étant ici obtenues par forgeage puis usinage de l'essieu 2.

La fabrication de la pièce monobloc forgée avec ses mains d'essieu 10, 10b implique d'avoir un brut de forge de diamètre surdimensionné à l'endroit des mains d'essieu 10, 10b et de retirer un important volume de matière par usinage autour des mains d'essieu (pour limiter la masse de l'atterrisseur au strict nécessaire).

Une telle tige coulissante 1 est par conséquent complexe à réaliser car elle nécessite un brut forgé de grandes dimensions et un temps d'usinage important avec une importante perte de matière.

Afin de pallier ces inconvénients, plutôt que de fabriquer une seule pièce forgée monobloc, dans l'exemple illustré par les figures 2a et 2b, il est proposé de réaliser un atterrisseur d'aéronef doté de mains d'essieu rapportées sur l'essieu 2.

L'essieu 2 forme une pièce mâle M0 emboîtée dans une pièce femelle F0 qui forme la main d'essieu rapportée 10.

Cette pièce mâle M0 présente une surface de contact externe en contact contre une surface de contact interne de la pièce femelle F0, ces surfaces étant agencées pour permettre l'emboîtement de la pièce mâle M0 dans la pièce femelle F0 suivant une direction d'emboîtement D.

Ces surfaces de contact interne et externe comportent des cannelures Cx dont des portions de surface sont complémentaires entre elles pour s'opposer à la rotation de la pièce femelle F0 par rapport à la pièce mâle M0 autour de l'axe de rotation de roue Rx.

Ainsi, le diamètre du brut forgé utilisé pour fabriquer l'essieu 2 peut être minimisé par rapport à l'essieu de la figure 1.

Cette solution de transmission de couple mécanique par emboîtement d'une pièce mâle M0 dans une pièce femelle F0 est avantageuse car elle permet un remplacement / échange de la pièce femelle F0 (par exemple pour répondre à un besoin de maintenance ou d'évolution technique de l'atterrisseur).

Toutefois, cette solution nécessite un traitement de la surface externe de la pièce mâle et de la surface interne de la pièce femelle pour limiter l'usure mécanique, les amorces de rupture et la corrosion de ces surfaces.

La qualité et l'homogénéité de ces traitements de surfaces est un facteur déterminant pour la durée de vie de l'atterrisseur.

De nombreuses méthodes d'accouplement mécanique entre pièces mâle et femelle sont connues dans d'autres domaines techniques que celui des atterrisseurs d'aéronef.

Ces méthodes d'accouplement utilisées dans des domaines techniques éloignés de celui des atterrisseurs ne sont pas directement applicables au domaine spécifique des atterrisseurs.

Une méthode d'accouplement mécanique entre pièce mâle emboîtée dans une pièce femelle est par exemple décrite dans le document brevet WO2013/152386A.

### OBJET DE L'INVENTION

Un objet de la présente invention est de fournir un atterrisseur d'aéronef comportant une pièce mâle emboîtée dans une pièce femelle de manière à faire obstacle au pivotement de la pièce femelle par rapport à la pièce mâle tout en résolvant tout ou partie des inconvénients précités des atterrisseurs de l'art antérieur.

### RESUME DE L'INVENTION

A cet effet, l'invention concerne un atterrisseur d'aéronef selon la revendication 1.

Pour la compréhension de l'invention, par surface de contact externe fermée exclusivement convexe, on entend que la surface de contact externe de la pièce mâle observée suivant la direction d'emboîtement a un profil ayant un contour fermé dépourvu de portions concaves.

En éliminant les concavités sur la surface de contact externe de la pièce mâle observée selon la direction d'emboîtement (comme les concavités des cannelures Cx de l'exemple précité des figures 2a et 2b), on supprime les alternances entre formes concaves et formes convexes sur la surface externe de la pièce mâle.

Ainsi, on supprime des concavités de pièce mâle qui sont usuellement :
- difficiles à usiner pour former la concavité ;
- soumises à des concentrations de contraintes mécaniques du fait de sollicitations combinées en flexion et en torsion, les contraintes maximales ayant tendance à apparaitre à l'endroit des alternances entre portion de surface concave et portion de surface convexe ; et
- sensibles à la corrosion (elles favorisent l'accumulation d'humidité) et difficiles à traiter de manière parfaitement homogène contre des risques de corrosion (les traitements de surfaces sont plus facilement appliqués sur les surfaces convexes que sur les surfaces concaves ce qui induit une moindre résistance à la corrosion dans les concavités).

Grâce à l'emboîtement particulier entre pièce mâle et pièce femelle, l'atterrisseur selon l'invention offre une solution efficace pour transmettre des couples mécaniques, y compris dans les zones de l'atterrisseur qui subissent de fortes concentrations de contraintes en torsion, flexion et cisaillement.

Le mode de réalisation est avantageux en ce qu'il permet de transmettre les efforts de freinage vers l'essieu via une pièce femelle couplée sur l'essieu. Cette solution de transmission de couple de freinage vers l'essieu présente les avantages précités de l'invention. Selon un autre exemple particulier (ci-après nommé deuxième exemple) alternatif du précédent, et ne tombant dans le domaine de protection des revendications, l'atterrisseur comporte une tige coulissante qui constitue la pièce mâle et qui porte en partie basse un essieu destiné à recevoir d'une part une roue à rotation selon un axe de rotation, et d'autre part un frein associé à la roue pour la freiner, la pièce femelle constitue une couronne de frein appartenant au frein.

Dans ce mode de réalisation particulier, ladite direction d'emboîtement est parallèle et confondue avec un axe de rotation de la roue par rapport à l'essieu et la pièce mâle constituant la tige est emboîtée dans la pièce femelle constituant la couronne de frein pour directement transmettre des couples de freinage du frein vers tige coulissante.

Cet exemple est avantageux en ce qu'il permet une transmission directe des couples de freinage de la couronne de frein vers la tige coulissante sans nécessiter de pièce intermédiaire entre la couronne de frein et la tige coulissante.

Dans un autre exemple particulier, ne tombant pas dans le domaine de protection des revendications, alternatif aux précédents exemples particuliers dudit atterrisseur, ladite pièce femelle constitue une tige coulissante de l'atterrisseur qui porte en partie basse de la tige coulissante ladite pièce mâle, ladite pièce mâle constituant un essieu de l'atterrisseur destiné à recevoir d'une part une roue à rotation selon un axe de rotation et d'autre part un frein associé à la roue, ladite direction d'emboîtement étant parallèle et confondue avec l'axe de rotation de la roue.

Dans cet exemple, les portions de la surface de contact externe qui sont en formes de lobes constituent des obstacles au pivotement de l'essieu par rapport à la tige coulissante.

Pour les raisons indiquées précédemment, cet assemblage présente une forte résistance mécanique particulièrement adaptée à la jonction entre la tige coulissante et l'essieu.

Dans un autre exemple, ne tombant pas dans le domaine de protection des revendications, (ci-après nommé quatrième exemple), celui-ci comporte un caisson et une tige coulissante qui porte un essieu en partie basse de la tige coulissante, la tige coulissante étant montée coulissante vis-à-vis du caisson, à l'intérieur du caisson. Cet atterrisseur comporte également un manchon emboîté sur le caisson suivant la direction d'emboîtement, le caisson constituant la pièce mâle et le manchon constituant la pièce femelle, lesdits lobes arrondis étant formés sur le caisson pour former obstacle à la rotation du manchon autour de la direction d'emboîtement.

Cet atterrisseur comportant également un compas doté de premier et second bras articulés entre eux via un axe de compas, le premier bras étant articulé sur la tige coulissante et le second bras étant articulé sur le manchon, ce compas étant agencé pour s'opposer à la rotation de la tige coulissante vis-à-vis du caisson tout en autorisant le coulissement de la tige coulissante dans le caisson.

Cet exemple est avantageux car il permet de facilement installer une articulation de compas sur un caisson sans avoir à forger cette articulation sur le caisson.

Les contraintes de fabrication du caisson sont ainsi minimisées tout en permettant une meilleure répartition des couples mécaniques sur le caisson.

L'invention concerne également un aéronef équipé d'un tel atterrisseur.

D'autres caractéristiques et avantages de l'invention ressortiront à la lecture de la description qui suit de plusieurs modes de réalisation particuliers non limitatifs de l'invention.

### BREVE DESCRIPTION DES DESSINS

Il sera fait référence aux dessins annexés, parmi lesquels :
[Fig. 1] la figure 1 est vue schématique partielle d'un atterrisseur selon l'art antérieur ;
[Fig. 2a] la figure 2a présente une vue en coupe d'une partie d'un atterrisseur d'aéronef de l'art antérieur ;
[Fig. 2b] la figure 2b présente une vue en perspective de la tige d'atterrisseur de la figure 2a ;

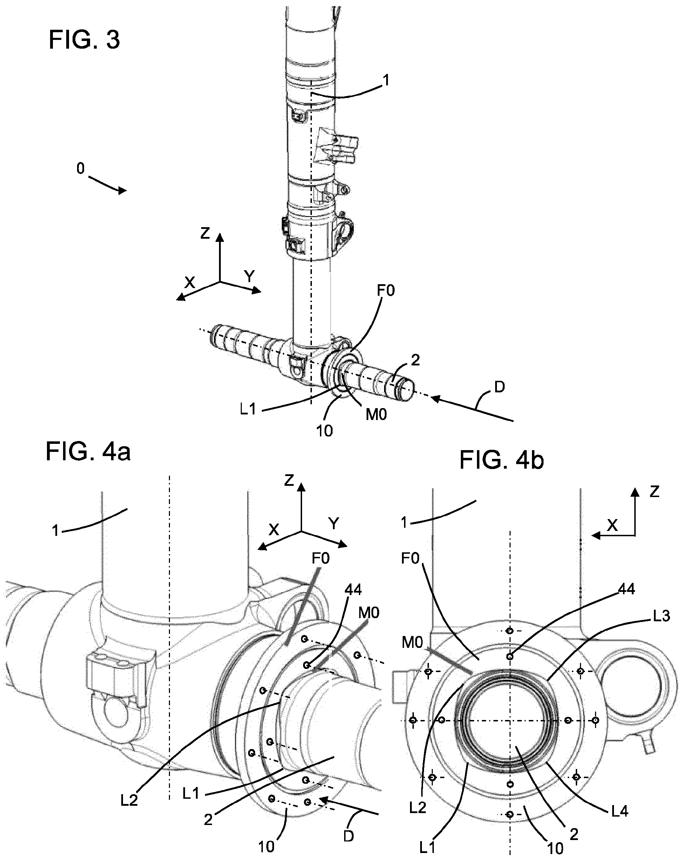

[Fig. 3] la figure 3 présente une vue en perspective d'une partie d'un atterrisseur d'aéronef selon le mode de réalisation de l'invention ;
[Fig. 4a] la figure 4a présente une vue en perspective de détail de l'extrémité inférieure de la partie d'atterrisseur illustrée à la figure 3 ;
[Fig. 4b] la figure 4b est une vue de côté de cette extrémité inférieure, suivant une direction d'observation Y d'un repère XYZ représenté sur la figure 4a ;

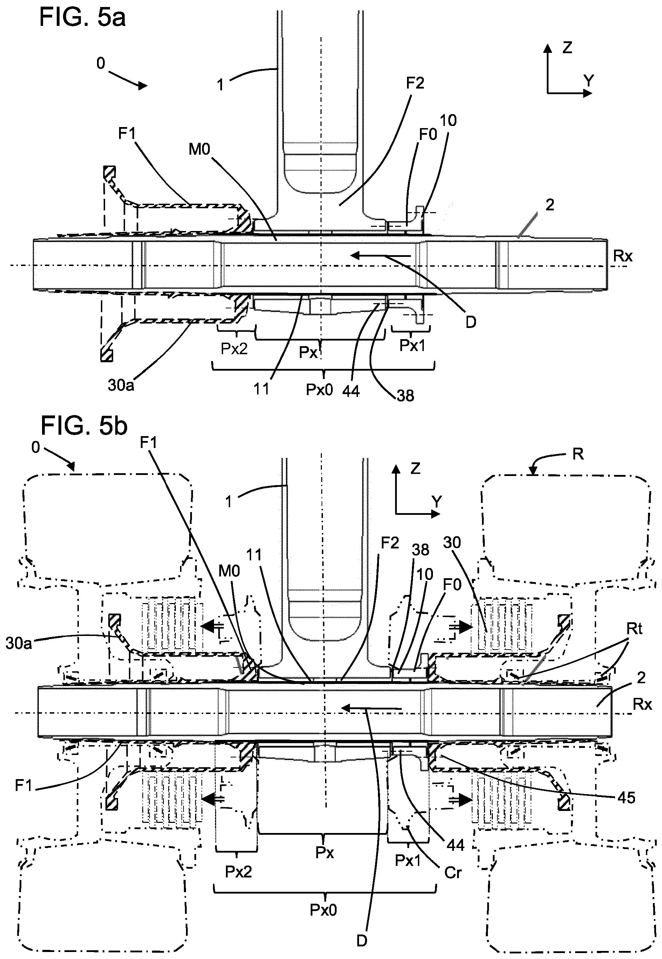

[Fig. 5a] la figure 5a est une vue en coupe, selon un plan Y-Z, d'un atterrisseur d'aéronef selon un deuxième exemple, ne tombant pas dans le domaine de protection des revendications;
[Fig. 5b] la figure 5b est une vue en coupe dans un plan Y-Z de l'atterrisseur d'aéronef illustré à la figure 5a ;

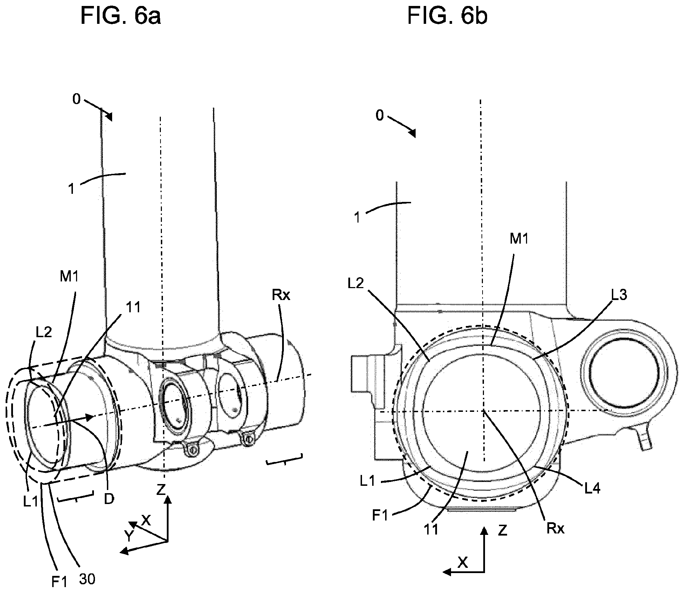

[Fig. 6a] la figure 6a est une vue en perspective d'une extrémité de tige coulissante d'un atterrisseur d'aéronef selon le troisième exemple;
[Fig. 6b] la figure 6b est une vue de côté de ladite extrémité représentée à la figure 6a suivant la direction d'observation Y du repère XYZ de la figure 6a ;

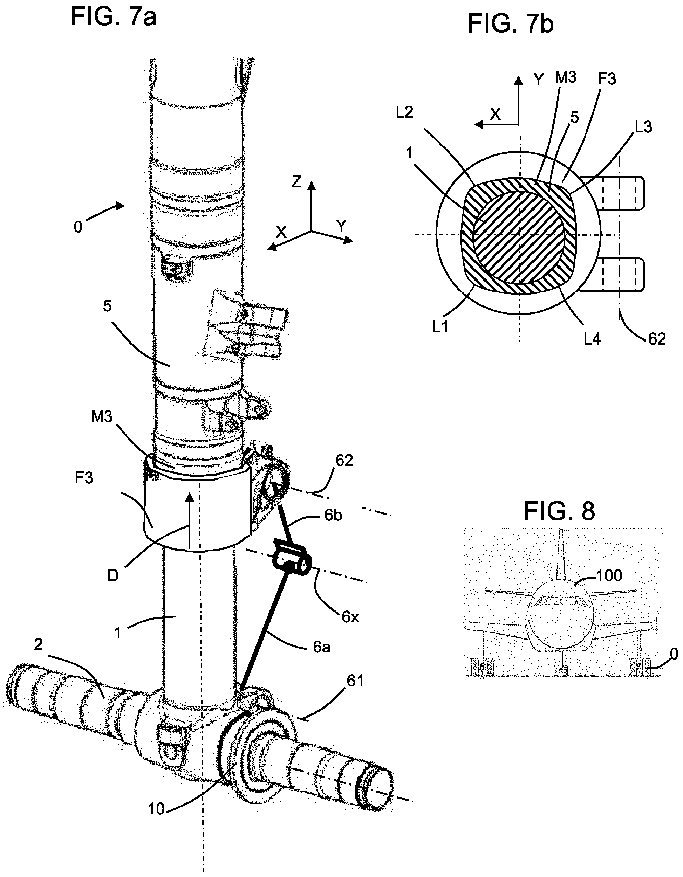

[Fig. 7a] la figure 7a est une vue en perspective d'une partie d'atterrisseur d'aéronef selon le quatrième exemple;
[Fig. 7b] la figure 7b est une vue partielle en coupe transversale (selon un plan parallèle au plan XY) de la partie d'atterrisseur d'aéronef représentée à la figure 7a ;
[Fig. 8] la figure 8 est une vue de face d'un aéronef 100 selon l'invention doté d'un atterrisseur 0 selon l'invention.

### DESCRIPTION DETAILLEE DE L'INVENTION

En référence aux figures 3 à 7b, l'invention porte essentiellement sur un atterrisseur 0 d'aéronef 100, comportant une pièce mâle M0, M1, M3 emboîtée dans une pièce femelle F0, F1, F2, F3.

La pièce mâle présente une surface de contact externe en contact contre une surface de contact interne de la pièce femelle.

La surface de contact interne et la surface de contact externe sont agencées pour permettre l'emboîtement de la pièce mâle dans la pièce femelle suivant une direction d'emboîtement D.

La surface de contact externe de la pièce mâle M0, M1, M3, lorsqu'observée suivant ladite direction d'emboîtement D présente un profil à contour fermé qui est exclusivement convexe et possède des portions de surface de contact externe en forme de lobes arrondis L1, L2, L3, L4, dans la représentation (il est tout à fait envisageable de réduire à 3 ou d'augmenter le nombre de lobes).

Chacun de ces lobes forme un obstacle au pivotement de la pièce femelle F0, F1, F2, F3 par rapport à la pièce mâle M0, M1, M3 autour de la direction d'emboîtement D.

Sur les figures, la surface de contact interne de la pièce femelle F0, F1, F2, F3 est également une surface fermée de forme complémentaire de la surface de contact externe de la pièce mâle.

Ainsi la surface de contact interne, lorsqu'observée suivant la direction d'emboîtement D, présente un profil ayant un contour fermé et exclusivement concave, c'est-à-dire dépourvu de portion convexe.

Préférentiellement, comme on le comprend des exemples illustrés par les figures 4b, 5b, 6b et 7b, la surface de contact externe de la pièce mâle M0, M1, M3 est symétrique par rapport à un plan longitudinal médian Y-Z de la pièce mâle.

La direction d'emboîtement D est préférentiellement parallèle au plan longitudinal médian Y-Z de la pièce mâle M0.

Préférentiellement, les lobes L1, L2, L3, L4 sont régulièrement répartis à la périphérie de la pièce mâle et autour de la direction d'emboîtement D et ils sont au moins au nombre de 3 lobes.

Dans les modes de réalisation illustrés sur les figures 3 à 7b, les lobes sont au nombre de 4 et sont identiques entre eux.

Ces caractéristiques permettent d'avoir quatre orientations possibles de la pièce mâle dans la pièce femelle ce qui facilite l'assemblage des pièces, on peut aussi se servir d'un nombre impair de lobes et/ou une répartition particulière de ces lobes lorsqu'on souhaite avoir un détrompage naturel.

Dans chacun des exemples illustrés par les figures 3, 4a et 4b, 5a, 5b, 6a, 6b, 7a, 7b, l'atterrisseur 0 comporte une tige coulissante 1 qui porte en partie basse un essieu 2.

L'essieu 2 est destiné à recevoir :
- d'une part au moins une roue R (en l'occurrence deux roues) à rotation selon un axe de rotation Rx de la roue ; et
- d'autre part au moins un frein 30 (en l'occurrence deux freins 30, 30a) associé à la roue R pour la freiner.

L'intégration des roues et des freins peut être réalisée de différentes manières.

Une manière particulière d'intégrer roues et freins dans l'atterrisseur 0 sera illustrée ci-après en référence aux figures 5a et 5b.

Dans le mode de réalisation de l'invention illustré par les figures 3, 4a, 4b, la pièce mâle M0 est constituée par l'essieu 2 et la pièce femelle F0 est constituée par une main d'essieu 10 rapportée par emboîtement suivant la direction d'emboîtement D.

Chaque pièce femelle F0 forme ainsi une liaison mécanique entre l'un au moins des freins 30 et la pièce mâle M0 pour transmettre des couples de freinage du frein 30 concerné vers la pièce mâle 2.

Les lobes L1, L2, L3, L4 sont ici formés sur la surface de contact externe de l'essieu 2.

La surface de contact interne de la pièce femelle F0 qui est complémentaire de ladite surface de contact externe est ici formée à l'intérieur d'un alésage de la main d'essieu 10.

La direction d'emboîtement D est ici confondue avec l'axe de rotation Rx de chacune des roues R par rapport à ladite pièce mâle M0 appartenant à l'essieu 2.

Dans le deuxième mode de réalisation illustré par les figures 5a et 5b, l'atterrisseur 0 comporte des roulements Rt pour guider en rotation les roues R autour de l'essieu 2 selon l'axe de rotation Rx.

Les freins 30, 30a comportent chacun un tube de stator F1 et un empilement de disques alternant disque de stator et disque de rotor.

Les disques de stator de chaque frein donné sont en prise avec le tube de stator F1 de ce frein donné.

Les disques de rotor de chaque frein donné sont en prise avec une jante de la roue R à freiner par ce frein donné. Chaque frein donné 30, 30a comporte également une couronne hydraulique Cr, schématisée en trait mixte, prévue pour sélectivement presser l'empilement de disques correspondant pour sélectivement freiner la roue R associée au frein donné. L'essieu 2 et la tige coulissante 1 s'étendent en longueur dans le plan de coupe Y-Z.

Cette manière d'intégrer la ou les roues et le ou les freins vis-à-vis de la tige 1 et de de l'essieu 2 est transposable vers l'un quelconque des modes de réalisation de l'atterrisseur selon l'invention.

Plusieurs exemples d'emboîtements possibles de la pièce mâle M0 (en l'occurrence l'essieu 2) avec des pièces femelles F0, F1, F2 sont présentés sur les figures 5a et 5b pour transmettre des couples de freinage de frein vers la tige coulissante 1 via les lobes arrondis de la pièce mâle M0.

Chacun de ces exemples d'emboîtements peut être utilisé en un seul ou en plusieurs emplacements de l'atterrisseur. Par exemple, une solution donnée d'emboîtement peut être utilisée pour transmettre des couples d'un premier frein 30 vers la tige 1 et cette même solution peut être utilisée, en symétrie par rapport à un plan transversal médian de l'essieu, pour transmettre des couples d'un second frein 30a vers la tige 1.

Selon un premier exemple d'emboîtement illustré en partie droite de l'atterrisseur (portée Px1), la pièce femelle F0 est une main d'essieu rapportée 10 pour transmettre les couples de freinage du frein vers l'essieu 2 via la main d'essieu 10.

Le tube de stator F1 du frein est ici fixé / solidarisé sur la main d'essieu 10 via des fixations 45, comme des boulons.

La main d'essieu 10 est rapportée et emboîtée sur la pièce mâle M0 de sorte que la surface de contact interne de la pièce femelle F0 qui forme un alésage central, non circulaire, de la main d'essieu soit reçue à ajustement sur la surface de contact externe de la pièce mâle M0 qui forme aussi une portée non circulaire pour immobiliser en rotation la pièce femelle F0 sur la pièce mâle M0.

Idéalement, la pièce mâle M0 et la pièce femelle F0 sont assemblées de manière à ce qu'elles soient indexées axialement l'une par rapport à l'autre.

A cette fin, il est possible de faire en sorte que la pièce femelle qui peut être la main d'essieu soit montée serrée autour de la pièce mâle qui peut être un essieu. Cet exemple limite le besoin d'avoir une pièce d'arrêt axial spécifique.

On peut aussi faire en sorte que des moyens de serrage 44 maintiennent la pièce femelle contre des moyens d'arrêt axial 38 formés sur la pièce mâle pour immobiliser axialement la pièce femelle F0 sur la pièce mâle M0 selon la direction d'emboîtement D.

Ces moyens de serrage 44 sont ici constitués par des vis traversant la pièce femelle F0 et ayant des portions longitudinales filetées engagées dans des taraudages de la pièce mâle.

La pièce femelle F0 est ainsi serrée entre des têtes de vis 44 et un épaulement d'arrêt axiale 38 formée à la périphérie de la pièce mâle M0.

La pièce mâle M0 formant essieu 2 est rapportée sur la tige coulissante 1 par emboîtement dans un alésage 11 traversant une zone inférieure de la tige coulissante 1.

Cet alésage 11 forme une portée non circulaire Px contre laquelle la pièce mâle M0 est en appui pour immobiliser en rotation la pièce mâle M0 par rapport à la tige coulissante 1.

Cet alésage 11 et l'essieu 2 ont des portées non circulaires de formes complémentaires l'une de l'autre de manière à s'opposer à toute rotation de l'essieu 2 par rapport à la tige 1.

La portée non circulaire Px de l'alésage 11, lorsqu'observée suivant une direction longitudinale de l'essieu 2 est une surface fermée (c'est-à-dire à profil de contour fermé) exclusivement concave et présentant des formes complémentaires des lobes L1, L2, L3, L4 arrondis formant des obstacles au pivotement de l'essieu 2 par rapport à la tige coulissante 11.

Cette portée non circulaire Px de l'alésage 11 est de forme complémentaire d'une portée externe Px0 de l'essieu 2. L'essieu présente une section transversale qui est constante sur toute la portée Px0 de l'essieu qui s'étend de part et d'autre de la tige pour assembler la main d'essieu directement sur l'essieu (comme sur la partie droite de l'atterrisseur au niveau de la portée Px1) ou pour assembler un tube de stator de frein directement sur l'essieu (comme sur la partie gauche de l'atterrisseur au niveau de la portée Px2).

Selon le deuxième exemple d'emboîtement illustré en partie gauche de l'atterrisseur sur les figures 5a et 5b, la pièce femelle F1 constitue un tube de stator de frein 30a directement emboîté sur la surface de contact externe de l'essieu 2 pour transmettre le couple de freinage par contact direct entre le tube F1 et l'essieu 2 via les lobes arrondis.

Ici la liaison entre le stator de frein et l'essieu est réalisée sans nécessiter une main d'essieu.

Selon le troisième exemple d'emboîtement illustré par les figures 5a et 5b, la pièce femelle F2 constitue la tige coulissante 1 de l'atterrisseur 0, cette pièce F2 comportant l'alésage 11 dans lequel est emboîté l'essieu 2.

Comme indiqué précédemment, cet alésage 11 est non circulaire et de forme complémentaire de ladite surface de contact externe de l'essieu 2 pour réaliser une indexation à rotation de l'essieu 2 par rapport à la tige coulissante 1 via lesdits lobes L1, L2, L3, L4 formant des obstacles.

Cet exemple d'emboîtement de l'essieu permet une meilleure répartition du couple mécanique de freinage tout autour de l'essieu à l'interface entre l'alésage 11 et la surface externe de l'essieu.

Selon ledit troisième exemple illustré par les figures 6a et 6b, la tige coulissante 1 constitue la pièce mâle M1 et la pièce femelle F1 (schématisée en pointillés) est constituée par une couronne de stator frein 30 / 30a (par exemple semblable au tube de stator présenté aux figures 5a et 5b) ou par une bague intermédiaire (de type main d'essieu rapportée pour fixer le stator de frein) ou par une couronne hydraulique de frein (du type de la couronne Cr précitée).

Cette pièce femelle F1 est directement indexée à rotation via les lobes L1, L2, L3, L4 formés à l'extérieur de la tige coulissante 1.

Dans cet exemple, l'essieu (non représenté) est un essieu rapporté qui passe au travers d'un alésage 11 traversant de la tige. Toutefois il serait aussi possible de faire en sorte que l'essieu soit intégré à la tige 1 pour former une seule pièce monobloc.

Dans cet exemple des figures 6a, 6b, la surface externe fermée exclusivement convexe de la pièce mâle M1 est disposée pour s'étendre tout autour d'un axe longitudinal de l'essieu 2.

Cet exemple des figures 6a et 6b est particulièrement avantageux car il permet d'éviter que le couple de freinage ne transite par l'essieu ou par une main d'essieu, ce qui limite les contraintes reçues par l'essieu.

Par ailleurs, cet exemple permet de limiter le nombre de pièces de liaison entre le frein et la tige. Selon ledit quatrième exemple de l'atterrisseur, illustré par les figures 7a et 7b, l'emboîtement particulier entre pièce mâle M3 et pièce femelle F3 permet de transmettre des couples entre la tige coulissante 1 et un caisson 5 dans lequel coulisse cette tige 1, ces couples transitant via un compas articulé 6. Le caisson 5 constituant la pièce mâle M3 présente une forme simplifiée puisque les parties nécessaires à la liaison avec le compas 6 ne sont pas réalisées sur le caisson lui-même mais sur un manchon qui constitue la pièce femelle F3.

Le manchon F3 est emboîté sur le caisson 5 suivant la direction d'emboîtement D qui est ici parallèle à la direction de coulissement de la tige 1 dans le caisson 5. A cette fin, le compas 6 (schématisé en trait plein épais) est doté de premier et second bras 6a, 6b articulés entre eux via un axe de compas 6x qui s'étend selon une direction perpendiculaire à la direction d'emboîtement D.

Le caisson 5 comporte la surface externe exclusivement convexe, lorsqu'observée suivant la direction d'emboîtement D, cette surface étant dotée des lobes arrondis L1, L2, L3, L4 formant obstacle au pivotement de la pièce femelle F3.

Une extrémité du premier bras 6a du compas 6 est articulée via un premier pivot de compas 61 au bas de la tige coulissante 1 et une extrémité du second bras 6b du compas 6 est articulée via un second pivot de compas 62 au manchon F3 de manière ce que le couple s'opposant au pivotement de la tige coulissante 1 vis-à-vis du caisson 5 transite via le manchon F3, les lobes formant obstacles à la rotation de la pièce femelle F3 vis-à-vis du caisson 5, M3.

Les pivots 61 et 62 sont parallèles à l'axe de compas 6x pour permettre le coulissement de la tige dans le caisson tout en conservant une orientation fixe de la tige 1 par rapport au caisson 5.

L'emboîtement de la pièce mâle M3 comportant les lobes L1, L2, L3, L4 dans la pièce femelle F3 permet la transmission de couples entre la tige 1 et le caisson 5 via le compas 6 et via le manchon F3 en maintenant l'orientation de la tige 1 dans le caisson 5 tout au long du coulissement de la tige.

Bien entendu, l'invention n'est pas limitée au mode de réalisation décrit ci-avant mais englobe toute variante entrant dans le champ de l'invention telle que définie par les revendications.

En particulier, le type d'assemblage entre pièce mâle et pièce femelle avec la surface de contact externe de la pièce mâle exclusivement convexe et ses lobes arrondis formant obstacle à la rotation de la pièce femelle par rapport à la pièce mâle sur laquelle cette pièce femelle est emboîtée est applicable à l'assemblage de n'importe quel couple de pièce mâle et femelle de l'atterrisseur, dans toute zone de l'atterrisseur où l'on souhaite transmettre de forts couples de torsion et de flexion tout en limitant le volume de matière à engager dans l'assemblage.

Ainsi, dans un exemple de l'atterrisseur, la pièce mâle est constituée par le caisson de l'atterrisseur et la pièce femelle est constituée par une bague dans laquelle le caisson est emboîté, l'atterrisseur comportant également une contrefiche principale ayant une extrémité supérieure adaptée pour être articulée via un axe d'articulation supérieur à une zone de structure d'aéronef et une extrémité inférieure articulée vis-à-vis de la pièce femelle via un axe d'articulation de contrefiche principale.

La contrefiche principale est ici déformable entre une première configuration adoptée lorsque l'atterrisseur est en configuration rétractée et une seconde configuration adoptée lorsque l'atterrisseur est en configuration déployée. Lorsque l'atterrisseur est dans sa configuration déployée, la contrefiche principale supporte des efforts importants pour s'opposer au passage de l'atterrisseur vers sa configuration rétractée.

L'invention est ici particulièrement utile pour simplement relier la contrefiche principale au caisson et pour transmettre lesdits efforts importants.

Un avantage de cette solution est de facilement former la liaison mécanique entre le caisson et la contrefiche principale par emboitement de la pièce femelle sur le caisson.

Ainsi, un caisson peut ainsi être adapté à plusieurs géométries d'atterrisseurs en choisissant une pièce femelle adaptée.

Dans cet exemple, la liaison entre l'axe d'articulation de la contrefiche principale et la pièce femelle peut éventuellement se faire via une chape portée par la pièce femelle ou portée par l'extrémité inférieure de la contrefiche.

Dans un autre mode de réalisation particulier de l'atterrisseur selon l'invention, la pièce femelle peut comporter une chape externe pour y fixer un ou plusieurs accessoires appartenant à l'atterrisseurs.

Un accessoire peut par exemple être sélectionné parmi un harnais, une pipe (une pipe est un tube de guidage adapté pour guider le passage de conduites ou de câbles à l'intérieur du tube et entre des extrémités ouvertes de ce tube), un actionneur (par exemple un moteur électrique) ou un mécanisme.

Selon le cas, dans ce mode de réalisation particulier de l'atterrisseur selon l'invention, la pièce mâle pourrait toujours être le caisson ou la tige coulissante ou tout autre pièce mâle de l'atterrisseur.

Dans ce mode de réalisation particulier, l'invention est utilisée pour simplement fixer un ou plusieurs accessoires tout permettant une transmission de couple fonctionnels entre le ou les accessoires et la pièce mâle.

Il est également possible de faire en sorte que ces différents exemples d'emboîtements entre pièce mâle M0 et pièce femelle F1, F2, F3 soient combinés et simultanément présents sur un même atterrisseur 0.

Idéalement, la surface de contact interne de la pièce femelle et la surface de contact externe de la pièce mâle sont ajustées pour obtenir un contact continu serré de la pièce femelle autour de pièce mâle.

Enfin, le nombre de lobes peut varier sans sortir du cadre de l'invention. On peut par exemple avoir 2 lobes, préférentiellement 3 lobes, préférentiellement 4 lobes ou 5 ou 6 lobes ou plus, étant entendu que plus le nombre de ces lobes et important et plus les contraintes sont régulièrement réparties autour de l'assemblage.

## Revendications

1. Atterrisseur d'aéronef (0), comportant une pièce mâle (M0, M1, M3) emboîtée dans une pièce femelle (F0, F1, F2, F3) suivant une direction d'emboîtement (D), la pièce mâle présentant une surface de contact externe en contact contre une surface de contact interne de la pièce femelle, **caractérisé en ce que** la surface de contact externe de la pièce mâle (M0, M1, M3), lorsqu'observée suivant ladite direction d'emboîtement (D) est une surface fermée exclusivement convexe et présentant des portions de surface de contact externe en forme de lobes arrondis (L1, L2, L3, L4) formant des obstacles au pivotement de la pièce femelle (F0, F1, F2, F3) par rapport à la pièce mâle (M0, M1, M3) autour de la direction d'emboîtement (D), l'atterrisseur comportant une tige coulissante (1) qui porte en partie basse ladite pièce mâle (M0), ladite pièce mâle (M0) appartenant à un essieu (2) destiné à recevoir d'une part une roue (R) à rotation selon un axe de rotation (Rx) de la roue, et d'autre part un frein (30) associé à la roue (R) pour la freiner, ladite direction d'emboîtement étant confondue avec l'axe de rotation (Rx) de la roue (R) par rapport à ladite pièce mâle (M0) et la pièce femelle (F0, F1) formant une liaison mécanique entre le frein (30) et la pièce mâle (M0) pour transmettre des couples de freinage du frein (30) vers la pièce mâle (2).

2. Atterrisseur d'aéronef selon la revendication 1, dans lequel la surface de contact interne de la pièce femelle (F0, F1, F2, F3) est également une surface fermée et a forme complémentaire de la surface de contact externe de la pièce mâle.

3. Atterrisseur d'aéronef selon l'une quelconque des revendications 1 ou 2, dans lequel la surface de contact externe de la pièce mâle (M0, M1, M3) est symétrique par rapport à un plan longitudinal médian (Y-Z) de la pièce mâle.

4. Atterrisseur selon l'une quelconque des revendications 1 à 3, dans lequel :
- la pièce femelle (F0) est une main d'essieu (10) sur laquelle le frein (30) est solidarisé, la main d'essieu (10) étant rapportée et enfilée sur la pièce mâle (M0) de sorte que la surface de contact interne de la pièce femelle (F0) soit reçue à ajustement sur la surface de contact externe de la pièce mâle (M0) qui forme une portée non circulaire pour immobiliser en rotation la pièce femelle (F0) sur la pièce mâle (M0) ;
- des moyens de serrage (44) maintenant la pièce femelle contre des moyens d'arrêt axial (38) formés sur la pièce mâle pour immobiliser axialement la pièce femelle (F0) sur la pièce mâle (M0).

5. Atterrisseur selon l'une quelconque des revendications 1 à 4, dans lequel la pièce mâle (M0) est emboîtée dans un alésage (11) traversant une zone inférieure de la tige coulissante (1) et formant une portée non circulaire contre laquelle la pièce mâle est en appui pour immobiliser en rotation la pièce mâle par rapport à la tige coulissante (1).

6. Aéronef (100) comportant une structure portant au moins un atterrisseur (0) selon l'une quelconque des revendications 1 à 5.

## Patentansprüche

1. Luftfahrzeug-Fahrwerk (0), enthaltend ein männliches Teil (M0, M1, M3), das gemäß einer Einsteckrichtung (D) in ein weibliches Teil (F0, F1, F2, F3) eingesteckt wird, wobei das männliche Teil eine äußere Kontaktfläche aufweist, die mit einer inneren Kontaktfläche des weiblichen Teils in Kontakt steht, **dadurch gekennzeichnet, dass** die äußere Kontaktfläche des männlichen Teils (M0, M1, M3) in der Einsteckrichtung (D) gesehen eine geschlossene, ausschließlich konvexe Oberfläche darstellt und externe Kontaktflächenabschnitte in Form von abgerundeten Lappen (L1, L2, L3, L4) aufweist, die jeweils dazu dienen, einem Verdrehen des weiblichen Teils (F0, F1, F2, F3) in Bezug auf das männliche Teil (M0, M1, M3) um die Einsteckrichtung (D) herum entgegenzuwirken, wobei das Fahrwerk eine Gleitstange (1) enthält, die in dem unteren Bereich das männliche Teil (M0) trägt, wobei das männliche Teil (M0) zu einer Achse (2) gehört, die dafür bestimmt ist, einerseits ein sich um die Raddrehachse (Rx) herum drehendes Rad (R) und andererseits eine dem Rad (R) zugeordnete Bremse (30) zur Bremsung des Rades aufzunehmen, wobei die Einsteckrichtung in Bezug auf das männliche Teil (M0) und auf das weibliche Teil (F0, F1), das zur Übertragung der Bremsmomente der Bremse (30) auf das männliche Teil (2) eine mechanische Verbindung zwischen der Bremse (30) und dem männlichen Teil (M0) bildet, mit der Drehachse (Rx) des Rades (R) zusammenfällt.

2. Luftfahrzeug-Fahrwerk nach Anspruch 1, wobei die innere Kontaktfläche des weiblichen Teils (F0, F1, F2, F3) ebenfalls eine geschlossene Fläche darstellt und eine komplementäre Form zu der äußeren Kontaktfläche des männlichen Teils aufweist.

3. Luftfahrzeug-Fahrwerk nach einem der Ansprüche 1 oder 2, wobei die äußere Kontaktfläche des männlichen Teils (M0, M1, M3) symmetrisch zu einer Längsmittelebene (Y-Z) des männlichen Teils ausgebildet ist.

4. Fahrwerk nach einem der Ansprüche 1 bis 3, wobei:
- es sich bei dem weiblichen Teil (F0) um eine Achsaufnahme (10) handelt, mit welcher die Bremse (30) fest verbunden ist, wobei die Achsaufnahme (10) als ein Anbauteil ausgebildet ist, welches auf das männliche Teil (M0) aufgeschoben wird, sodass die innere Kontaktfläche des weiblichen Teils (F0) passgenau an der äußeren Kontaktfläche des männlichen Teils (M0) aufgenommen wird, welche eine nicht kreisförmige Auflagefläche bildet, die bewirkt, dass das weibliche Teil (F0) verdrehgesichert an dem männlichen Teil (M0) fixiert wird;
- Spannmittel (44) das weibliche Teil gegen axiale Anschlagmittel (38), die an dem männlichen Teil ausgebildet sind, gedrückt halten, um das weibliche Teil (F0) axial an dem männlichen Teil (M0) zu fixieren.

5. Fahrwerk nach einem der Ansprüche 1 bis 4, wobei das männliche Teil (M0) in eine Durchgangsbohrung (11) eingesteckt wird, die sich durch einen unteren Bereich der Gleitstange (1) hindurch erstreckt und eine nicht kreisförmige Auflagefläche bildet, an welcher das männliche Teil anliegt, damit das männliche Teil in Bezug auf die Gleitstange (1) verdrehgesichert fixiert ist.

6. Luftfahrzeug (100), enthaltend eine Struktur, die zumindest ein Fahrwerk (0) nach einem der Ansprüche 1 bis 5 trägt.

## Claims

1. Aircraft landing gear (0), comprising a male part (M0, M1, M3) interlocked in a female part (F0, F1, F2, F3) about an interlocking direction (D), the male part having an external contact surface in contact against an internal contact surface of the female part, **characterised in that** the external contact surface of the male part (M0, M1, M3), when observed along said interlocking direction (D) is an exclusively convex closed surface and having external contact surface portions in the form of rounded lobes (L1, L2, L3, L4) forming obstacles to the pivoting of the female part (F0, F1, F2, F3) with respect to the male part (M0, M1, M3) about the interlocking direction (D), the aircraft landing gear (0) comprising a sliding rod (1) which carries said male part (M0) in the bottom part, said male part (M0) belonging to an axle (2) intended to receive, on the one hand, a rotary wheel (R) about an axis of rotation (Rx) of the wheel, and on the other hand, a brake (30) associated to the wheel (R) to brake it, said interlocking direction coincide with the axis of rotation (Rx) of the wheel (R) with respect to said male part (M0) and the female part (F0, F1) forming a mechanical connection between the brake (30) and the male part (M0) to transmit braking torques of the brake (30) to the male part (2).

2. Aircraft landing gear according to claim 1, wherein the internal contact surface of the female part (F0, F1, F2, F3) is also a closed surface and has a shape which is complementary to the external contact surface of the male part.

3. Aircraft landing gear according to any one of claims 1 or 2, wherein the external contact surface of the male part (M0, M1, M3) is symmetrical with respect to a median longitudinal plane (Y-Z) of the male part.

4. Landing gear according to any one of the claims 1 to 3, wherein:
- the female part (F0) is an axle hand (10) on which the brake (30) is secured, the axle hand (10) being added and threaded on the male part (M0), such that the internal contact surface of the female part (F0) is received in adjustment on the external contact surface of the male part (M0) which forms a non-circular surface to rotatably immobilise the female part (F0) on the male part (M0);
- clamping means (44) holding the female part against axial stopping means (38) formed on the male part to axially immobilise the female part (F0) on the male part (M0).

5. Landing gear according to any one of claims 1 to 4, wherein the male part (M0) is interlocked in a bore (11) passing through a lower zone of the sliding rod (1) and forming a non-circular surface against which the male part bears to rotatably immobilise the male part with respect to the sliding rod (1).

6. Aircraft (100) comprising a structure carrying at least one landing gear (0) according to any one of claims 1 to 5.
